(19) Europäisches Patentamt
European Patent Office
Office européen des brevets

(11) Veröffentlichungsnummer: **0 206 217**
**B1**

(12) **EUROPÄISCHE PATENTSCHRIFT**

(45) Veröffentlichungstag der Patentschrift: **12.09.90**

(21) Anmeldenummer: **86108234.5**

(22) Anmeldetag: **16.06.86**

(51) Int. Cl.$^5$: **C 08 G 18/10,** C 08 G 18/12, C 08 G 18/32, C 08 G 18/08, D 06 N 3/14

# (54) Verfahren zur Herstellung von lichtechten, lösungsmittelbeständigen Polyurethanharnstoffelastomerbeschichtungen im Reaktiv-Beschichtungsverfahren.

(30) Priorität: **27.06.85 DE 3522978**

(43) Veröffentlichungstag der Anmeldung:
**30.12.86 Patentblatt 86/52**

(45) Bekanntmachung des Hinweises auf die Patenterteilung:
**12.09.90 Patentblatt 90/37**

(84) Benannte Vertragsstaaten:
**AT BE CH DE FR GB IT LI NL SE**

(56) Entgegenhaltungen:
**EP-A-0 013 890**
**EP-A-0 034 272**
**DE-A-1 570 524**
**US-A-3 936 409**

(73) Patentinhaber: **BAYER AG**
**D-5090 Leverkusen 1 Bayerwerk (DE)**

(72) Erfinder: **Weber, Karl-Arnold, Dr.**
**Saarstrasse 59**
**D-5090 Leverkusen 1 (DE)**
Erfinder: **Buysch, Hans-Josef, Dr.**
**Brandenburger Strasse 28**
**D-4150 Krefeld (DE)**
Erfinder: **Noble, Karl-Ludwig, Dr.**
**Gerstenkamp 12**
**D-5000 Koeln 80 (DE)**
Erfinder: **Träubel, Harro, Dr.**
**Dresdener Strasse 14**
**D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 206 217 B1

**Beschreibung**

Die Erfindung betrifft ein Verfahren zur Herstellung von lichtechten und lösungsmittelbeständigen Polyurethanharnstoffelastomerbeschichtungen nach dem Reaktivbeschichtungsverfahren aus NCO-Prepolymeren und Diaminen, welches dadurch gekennzeichnet ist, daß man nicht-blockierte Reaktivkomponenten auf Basis von NCO-Prepolymeren (aus Polyolen und (cyclo)aliphatischen Di- und anteilweise gegebenenfalls Polyisocyanaten) mit 4,4'-Diamino-$C_1$—$C_4$-tetraalkyl-dicyclohexylalkanen mit bis zu 4 Kohlenstoffatomen im Alkanrest oder diese Diamine enthaltenden Zubereitungen, in kontinuierlicher Vermischung und kontinuierlichem Austrag des Reaktionsgemisches umsetzt.

Das Verfarhen ist dadurch gekennzeichnet, daß man

A) NCO-Prepolymere aus

a) höhermolekularen Polyhydroxylverbindungen, gegebenenfalls unter Zusatz von nierdermolekularen Polyolen, wobei die Gesamtfunktionalität der Hydroxylverbindungen >1,90 bis <2,8 beträgt,

b) 85 bis 100 Gew.-% an aliphatischen insbesondere cycloaliphatischen Diisocyanaten, gegebenenfalls unter Zustaz von

b1) 15 bis 0 Gew.-% an Polyisocyanaten mit mindestens zwei aliphatischen oder cycloaliphatisch gebundenen NCO-Gruppen, vorzugsweise Polyisocyanate mit einer mittleren Funktionalität ≥3,

wobei der NCO-Gehalt der NCO-Prepolymeren A) von 2 bis 6 Gew.-%,

und die Gesamtfunktionalität f'' der NCO-Prepolymeren A) 1,95 bis 2,8,

und der Gehalt an monomeren Diisocyanaten im NCO-Prepolymer <2 Gew.-% beträgt

und die gegebenenfalls in organischen Lösungsmitteln wie Methylethylketon, Ethylacetat oder Toluol zu mindestens 70% Feststoff enthaltenden Lösungen gelöst sind, mit

B) 2,4'- bzw. 4,4'-Diamino-3,3',5,5'-$C_1$—$C_4$-tetraalkylldicyclohexylalkanen mit 1 bis 4 C-Atomen im Alkanrest oder in Form von Diamin-Zubereitungen aus Umsetzungsprodukten dieser Diamine mit bis zu 20 Äquivalentprozent der Amine mit im wesentlichen difunktionellen NCO-Prepolymeren aus Hydroxypolyethern und organischen Diisocyanaten, gelöst in Lösungsmitteln, welche keine Aldehyd- oder Keton-Carbonylgruppen besitzen, vorzugsweise in Ethylacetat oder Toluol, unter kontinuierlicher, getrennter Dosierung der Komponenten A) und B), un unter kontinuierlichem Austrag der Reaktivmischung auf das gewünschte Substrat oder auf einen intermediären Träger in dünnen Schichten aufträgt und in die noch reagierende Schicht das Substrat einlegt und gegebenenfalls bei erhöhter Temperatur die Lösungsmittel entfernt.

Die Beschichtung von Substraten wie Leder, Spaltleder, Textilien oder Vliesstoffen mit Polyurethanen nach dem Reaktivverfahren gehört seit längerem zum Stand der Technik. Beispielsweise seien in diesem Zusammenhang die DE—PS 872 268 (Beispiel 8), die DE—PS 957 564, die DE—AS 1 023 449, die DE—PS 1 240 656, die US—PS 3 194 793 und insbesondere die DE—AS 1 570 524 genannt. Bei dem Verfharen der letztgenannten deutschen Auslegeschrift spritzt man ein gegebenenfalls in einem Lösungsmittel gelöstes NCO-Prepolymeres, zusammen mit einem in einem Lösungsmittel gelösten organischen Diamin auf die zu beschichtende Unterlage, wobei das Äquivalentverhältnis zwischen Amino- und Hydroxylgruppen über 0,5 und das Äquivalentverhältnis zwischen Isocyanatgruppen und der Summe aus Hydroxyl- und Aminogruppen zwischen 0,95 und 1,6 leigen soll.

Im Labormaßstab lassen sich die Polyurethanharnstoffelastomeren aus den verschiedenartigsten, in den eben genannten Druckschriften beschriebenen Ausgangskoponenten sowie unter Einhaltung der unterschiedlichsten Mischungsverhältnisse dieser Ausgangkomponenten herstellen. Die Übertragung solcher Rezepturen auf technische Anlagen gelingt in aller Regel jedoch nicht, weil einerseits auf die Verarbeitbarkeit der Reaktionspartner z.B. die Viskosität, insbesondere aber auf ihre Reaktivität, Rücksicht genommen werden muß und weil andererseits im allgemeinen sehr hohe Anforderungen an das physikalische Eigenschaftsniveau von Polyurethanbeschichtungen gestellt werden. Hierbei tritt die Schwierigkeit auf, daß die gewünschten Eigenschaften des Polyurethanharnstoffs (z.B. Hydrolysenfestigkeit, hohe Knickbeständigkeit, Zugfestigkeit, Kälteflexibilität und Lichtbeständigkeit) zueinander in Widerspruch stehen: Produkte mit großer Hydrolysenfestigkeit und Zugfestigkeit haben im allgemeinen geringe Knickbeständigkeit und Kälteflexibilität und umgekehrt.

Auch die Reaktivitätsprobleme verhindern vielfach eine Übertragung der Verfahrensweise auf technische Anlagen. Werden die Einzelkomponenten z.B. durch externe Mischung, d.h. durch Verwirbeln zweier Flüssigkeitsstrahlen in der Luft, wie es gemäß DE—AS 1 570 524 bevorzugt ist, vereinigt, dann läßt sich im allgemeinen keine gute und gleichmaßige Vermischung der Reaktionspartner erreichen (P. Arbaud, Technicuir, Nr. 2, Februar 1970, Seite 29). Es entstehen deshalb in der Beschichtung Zonen unterschiedlicher physikalischer Eigenschaften, insbesondere hinsichtlich Lichtechtheit, Knickbeständigkeit und Reißfestigkeit (vgl. H. Träubel, "Polyurethanes in Leather Finishing and Coating", J. of the Soc. of Leather Techn. and Chem. *57*, Seite 61 (1973)).

Zur Umbehung der Reaktivitätsprobleme ist weiterhin beschrieben worden (DE—AS 26 37 115), NCO-Prepolymere mit blockierten aliphatischen Aminen bzw. aminogruppenhaltigen Addukten zu verarbeiten. Die aliphatischen Amine mußten blockiert werden, da es nicht möglich ist, die freien aliphatischen Amine mit den NCO-Prepolymeren so umzusetzen, daß sich ein Film oder eine Beschichtungsmasse ausbildet, die gut verläuft und am Substrat ausreichend haftet. Weiterhin ist die Reaktion mit den freien aliphatischen

Aminen so schnell ablaufend, daß sich die Vermischungsaggregate sofort mit Reaktionsprodukten zusetzten.

Aus der DE—OS 29 45 614, Seite 11 ist bekannt, daß cycloaliphatische Verbindungen auf Basis von 4,4'-Diamino-3,3',5,5'-tetraalkyl-dicyclohexylmethan (Alkyreste mit 1 bis 4 C-Atomen), die nach einem in der DE—OS beschriebenen Verfahren erhalten werden, zur Herstellung von Polykondensationskunststoffen wie Polyaminen, Polyurethanen, Polyharnstoffen und Epoxidharzen eingesetzt werden können.

In der DE—OS 3 011 711 wird ein verbessertes Verfahren zum Beschichten von Substraten mit Polyurethanharnstoffen beschrieben, indem man ein NCO-Prepolymer einsetzt, das aus einer Mischung aus einem Di- und einem 2 bis 20 Mol-% eines Triisocyanats besteht, das mit einem teilblockierten Härtersystem nach der DE—OS 2 637 115 umgesetzt wird. Als Triisocyanat werden dabei Trimerisate von Toluylendiisocyanat oder Mischtrimerisate aus Toluylendiisocyanat und Hexandiisocyanat eingesetzt. Bevorzugte NCO-Prepolymere beruhen auf der Basis von Toluylendiisocycanat.

Die DE—OS 33 09 992 beschreibt ein Verfahren zur Beschichtung von Spaltleder, indem man auf einen einstweiligen Träger eine Deckschicht und dann eine Reaktivmischung, welche erst auf der Deckschicht A) ein hochmolekulares Polyurethan ergibt, aufträgt und in die reagierende Masse das Spaltleder einpreßt. Das Reaktivsystem kann blockierte NCO-Prepolymere und vorzugsweise cycloaliphatische Diamine wie Dicyclohexylmethandiamine enthalten. Für den Aufbau der blockierten NCO-Prepolymere kommen aromatische Polyisocyanate in Betracht, wobei diese Blockierung vorzugsweise durch Ketoxime erfolgt (vgl. z.B. DE—OS 28 14 079, 29 02 090, 31 34 161 bzw. 30 04 327).

Die Umsetzung von NCO-Prepolymeren auf Basis aromatischer Diisocyanate mit aliphatischen oder cycloaliphatischen Diaminen verläuft jedoch so schnell, daß man entweder eine Blockierung der Prepolymere (z.B. mit Ketoximen) oder der Diamine (als vollständig oder teilblockierte Ketimin-Derivate) vornehmen muß. Der Einsatz blockierter Komponenten bringt jedoch viele Nachteile — so wird bei Ketoximblockierten NCO-Prepolymeren währen der Reaktion das Ketoxim abgespalten oder bei denen Ketimin-blockierten Diaminen muß in einer — nicht immer einfach zu steuernden Hydrolysereaktion — das zugrundeliegende Keton abgespalten werden. Die mögliche Umweltbelastung durch die Spaltprodukte erfordert zusätlichen technologischen Aufwand zur Zurückhaltung der Spaltprodukte.

Es war daher Aufgabe der Erfindung, ein Reaktivbeschichtungssystem zu entwickeln, das die Nachteile blockierter Systeme nicht besitzt, das hochlichtecht und verfärbungsstabil ist, gegenüber Lösungsmitteln sich als beständig als erweist un sich trotzdem sicher auf den üblichen kontinuierlichen Dosier- und Misch/Sprühgeräten störungsfrei verarbeiten läßt.

Es wurde nun überraschend gefunden, daß man auch unblockierte Ioscyanat-Prepolymere auf Basis aliphatischer oder cycloaliphatischer Di- und gegebenenfalls geringerer Mengen höherfunktioneller Polyisocyanate, welche im NCO-Prepolymer nur noch NCO-Gruppen (cyclo)aliphatischer Reaktivität besitzen, in Form ihrer hochkonzentrierten Lösungen, gegebenenfalls in Gegenwart von Pigmenten, Verlaufsmitteln, Katalysatoren, Farbstoffen und sonstigen überlichen Zusatzmitteln, im reaktivverfahren durch kontinuierliches Vermischen der Reaktivpartner in geeigneten Mischvorrichtungen und Auftragen auf einen einstweiligen Träger oder direkt auf das Substrat mit ausreichender Reaktionssicherheit zu Polyurethanharnstoffbeschichtungen umsetzen kann, wenn man als Kettenverlängerungsmittel die untenstehend noch näher charakterisierten Diamino-tetra-$C_1$—$C_4$-alkyl-dicyclohexylalkane einsetzt. Die NCO-Preopolymeren sollen einen möglichst geringen Gehalt an monomeren, aliphatischen oder cycloaliphatischen Diisocyanaten aufweisen, d.h. Gehalte an freien monomeren Diisocyanaten von <2,0 Gew.-% im Prepolymeren, vorzugsweise <0,5 Gew.-% aufweisen.

Gegenstand der Erfindung ist somit ein Verfahren zur Herstellung von lichtechten, lösungsmittelbeständigen Polyurethaneharnstoff-Elastomerbeschichtungen auf Substraten oder Umkehrträgern durch Umsetzung von NCO-Prepolymeren mit Diaminen in einem Reaktivverfharen unter kontinuierlicher Vermischung und kontinuierlichem Austrag der Reaktivmischung, dadurch gekennzeichnet, daß man

A) NCO-Prepolymere aus

a) höhermolekularen Polyhydroxylverbindungen mit Molekulargewichten von 400 bis 10000, vorzugsweise 600 bis 6000,

ab) gegebenenfalls unter Zusatz von niedermolekularen Polyolen vom Molekulargewicht 62 bis 390, vorzugsweise 62 bis 256, wobei die Gesamtfunktionalität f bzw. f' der Polyhydroxyverbindungen a) + ab) 1,90 bis 2,8, vorzugsweise 1,95 bis 2,7 beträgt, und

b) aliphatischen Di- und gegebenenfalls mehrfunktionellen Polyisocyanaten, wobei die Isocyanate b) aus

1. 85 bis 100 Gew.-% aliphatischen und insbesondere cycloaliphatischen Diisocyanaten, gegebenenfalls unter Zusatz von

2. 15 bis 0 Gew.-% mehrfunktinellen Polyisocyanaten, vorzugsweise Polyisocyanaten einer mittleren Funktionalität ≥3 mit höchstens einer aromatischen NCO-Gruppe und mindestens zwei aliphatischen und/oder cycloaliphatischen NCO-Gruppen

wobei der NCO-Endgruppen-Gehalt der NCO-Prepolymeren von 0,5 bis 6 Gew.-%, vorzugsweise 2,0 bis 4,5 Gew.-%

die Gesamtfunktionalität f'' der Prepolymeren A) 1,95 bis 2,8, vorzugsweise 2,0 bis 2,7,

und der Gehalt an monomeren Diisocyanaten im NCO-Prepolymeren <2 Gew.-%, vorzugsweise <1,0

Gew.-%, insbesondere <0,5 Gew.-% beträgt, und die NCO-Prepolymeren A) in flüssiger Form oder gegebenenfalls gelöst in

c) inerten, organischen Lösungsmitteln mit Siedepunkten bis 150°C, vorzugsweise Methylethylketon, Ethylacetat, Toluol oder Dialkylethern, zu mindestens 70 Gew.-% Feststoff enthaltenden Lösungen, mit

B) 2,4'- und/oder 4,4'-Diamino-3,3',5,5'-tetraalkyl-dicyclohexylalkanen der Formel

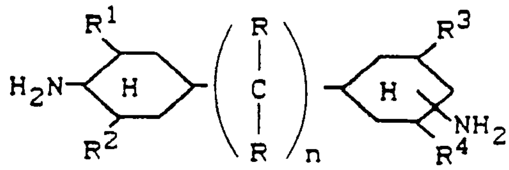

wobei die Positionen der zweiten Aminogruppe entweder die 2'- oder 4'-Stellung bedeutet, worin

$R^1$ bis $R^4$ gleichartig oder unabhängig voneinander geradkettig oder verzweigte Alkylreste mit 1 bis 4 Kohlenstoffatomen, wie Methyl, Ethyl, Propyl, Isopropyl, Butyl, Isobutyl, tert.-Butyl, vorzugsweise $R^1$ bis $R^4$ Ethyl oder Isopropyl, oder $R^1/R^2$ = Ethyl, $R^3$, $R^4$ = isopropyl bedeutet

R H, $CH_3$, $C_2H_5$ evtl. $R_3H_7$ oder $C_4H_7$ bedeutet, insgesamt im Rest

R

—C—

R;

die Reste R zusammen jedoch nicht mehr als nur 4 C-Atome aufweisen, vorzugsweise der

RCR-Rest

zusammen nicht mehr als 4 C-Atome aufweist, und

n 1, 2 oder 3 bedeutet,

oder vorzugsweise in Form von Diamin-Zubereitungen aus Umsetzungsprodukten dieser Diamine mit im wesentlichen difunktionellen NCO-Prepolymeren aus Hydroxypolyethern und organischen Diisocyanaten in Mengen von bis zu 20 Äquivalent-%, bevorzugt bis zu 10 Äquivalent-% der Aminogruppen,

gelöst in Lösungsmitteln, welche keine Aldehyd- oder Keton-Carbonylgruppen besitzen, vorzugsweise gelöst in Ethylacetat, gegebenenfalls unter Zusatz von Wasser oder Alkoholen in Mengen von mindestens 1 Mol Wasser und/oder Alkoholen pro $NH_2$-Gruppe

in $NCO/NH_2$-Äquivalentverhältnissen von A):B) = 4,0:1 bis 0,85:1, vorzugsweise 2,5:1 bis 0,94:1, besonders bevorzugt 1,3:1 bis 1:1, umsetzt und

in kontinuierlicher, getrennter Dosierung die Komponenten A) und B) in einem Hochleistungsmischgerät vermischt, unter kontinuierlichem Austrag die reaktivmischung auf das gewünschte Substrat oder auf einen intermediären Träger in einer oder mehreren, aufeinanderfolgenden dünnen Schichten aufträgt, anschließend das Substrat in die noch reagierende Schicht einlegt, und gegebenenfalls bei erhöhter Temperatur Lösungsmittel entfernt.

Nach dem geschilderten Vefahren werden überraschenderweise aus nicht-blockierten NCO-Prepolymeren A) und nichtblockierten freien Diaminen B) Reaktivmischungen erhalten, die eine hinreichende anfängliche Reaktionsverzögerung aufweisen, so daß sie in den Mischgeräten problemlos vermischt und gefördert werden können, nach Auftrag jedoch, z.B. durch Sprühen, noch einen kurzen, aber verfahrensentscheidenden flüssigen Zustand aufweisen, indem sie sich homogen auf dem Substrat oder Zwischenträger verteilen können und dann aber unter schneller Verfestigung zum Polyurethanharnstoff abreagieren.

Das Ergebnis ist überraschend, da mit einer Vielzahl von bekannten anderen aliphatischen oder cycloaliphatischen Diaminen eine sofortige Reaktion bzw. Verquallung erfolgt, wodurch die Mischgeräte bzw. Auftragsgeräte verunreinigt werden, verstopfen und somit ausfallen oder wodurch zumindest inhomogene Polyurethanharnstoffbeschichtungen entstehen, da bereits während des Sprühvorgangs die Polyharnstoffbildung zu weit fortgeschritten ist.

Das erfindungsgemäße Verfahren ist für ein Umkehr- oder Direktbeschichtungsverfahren, wie es für die Beschichtung von Leder oder Textil üblich ist in seiner Reaktionsgeschwindigkeit ausgezeichnet angepaßt. Die Reaktionsgeschwindigkeit ist insofern von großer Bedeutung, als sie einerseits ausreichend schnell sein muß, um innerhalb von ca. einer bis 5 Minuten, vorzugsweise 1½ bis 3 Minuten bei 20 bis 100°C bis Bildung eines nicht mehr klebenden Films zu ermöglichen und andererseit die Reaktionsgeschwindigkeit so langsam sein muß, daß die sogenannte Kleb- oder offene Zeit so groß ist, daß ein in

diese Mischung eingelegtes Substrat damit gut verklebt werden kann bzw. daß sich die Mischung auf dem Substrat gut verteilt und mit dem Substrat verbindet.

Als ein Maß für die Reaktionsgeschwindigkeit bzw. der Eignung der Reaktivmischung ist das Verfolgen der Viskosität der Reaktivmischung in einem verdünnten Medium geeignet, wobei gleichzeitig durch NCO-Titration der Umsetzugsgrad verfolgt werden kann. Der angewandte Reaktivitätstest wird ausführlich in dem Beispielteil beschrieben.

Die Reaktionsmischung soll im Reaktivitätstest einen Vickositätswert von 60000 mPas nicht unter 20 Sekunden und nicht über 500 Sekunden, vorzugsweise nicht unter 50 Sekunden und nicht über 300 Sekunden, insbesondere nicht unter 80 Sekunden un nicht über 180 Sekunden, erreichen.

Die im erfindungsgemäßen Verfharen einzusetzenden NCO-Prepolymeren (A) werden in an sich bekannter Weise aus höhermolekularen Polyhydroxyverbindungen a) und überschüssigen Mengen an aliphatischen und insbesondere cycloaliphatischen Diisocyanaten, gegebenenfalls unter Zusatz von Polyioscyanaten aliphatischer bzw. cycloaliphatischer Struktur, vorzugsweise Polyisocyanaten einer mittleren Funktionalität von $\geq 3$, hergestellt.

Als Polyisocyanate sind auch solche Mischisocyanate geeignet, welche nur eine aromatische NCO-Gruppe und daneben mindestens zwei aliphatische oder cycloaliphatisch gebundene NCO-Gruppen besitzen. Im NCO-Prepolymeren ist dabei die aromatische NCO-Gruppe bereits zur Urethanbindung umgesetzt und mit den Diaminen B) reagieren dann nur noch die (cyclo)aliphatischen NCO-Gruppen.

Als höhermolekulare Polyhydroxylverbindungen a) kommen die üblichen Hydroxy-polyester, Hydroxy-polyactone, Hydroxy-polycarbonate sowie die Hydroxy-polyether oder ihre Gemische bzw. Mischkondensate vorzugsweise in Betracht. Darüber hinaus können die an sich bekannten höhermolekularen Hydroxythioether, Hydroxypolyesteramide, Hydroxypolyacetale, Vinylpolymere mit funktionellen Endgruppen oder bereits Urethan- oder Harnstoffgruppen enthaltende Verbindungen, eingesetzt werden. Diese Verbindungen entsprechen dem Stand der Technik und werden in den Deutschen Offenlegungsschriften 2 854 384 und 2 920 501 aufgeführt.

Die in Frage kommenden Hydroxylgruppen aufweisenden Polyester sind z.B. Umsetzungsprodukte von mehrwertigen, vorzugsweise zweiwertigen, und gegebenenfalls zusätzlichen dreiwertigen Alkohlen, mit mehrwertigen, vorzugsweise zweiwertigen Carbonsäuren, Polycarbonsäureanhydriden oder Polycarbonsäureestern von niedrigen Alkoholen. Die Polycarbonsäuren können aliphatischer, cycloaliphatsicher, aromatischer und/oder heterocyclischer Natur sein und gegebenefalls, z.B. durch Halogenatome substituiert und/oder ungesättigt sein. Die Komponenten sind jedoch so ausgewählt, daß die schmelzpunkte der entstehenden Polyester nicht über 60°C liegen, d.h. die Verwendung von aromatischen Carbonsäuren wie Terephthalsäure ist nur als Cokomponente in kleineren Mengen üblich. Als Beispiele für Dicarbonsäuren seien genannt: Bernsteinsäure, Adipinsäure, Korksäure, Azelainsäure, Sebacinsäure, Phthalsäure, Phthalsäureanhydrid, Isophthalsäure, Hexahydrophthalsäureanhydrid, Tetrachlorphthalsäureanhydrid, Endomethylentetrahydrophthalsäureanhydrid, Glutarsäureanhydrid, Maleinsäure, Fumarsäure, in geringeren Mengen z.B.Trimellitsäure oder andere mehr als zweiwertige Polycarbonsäuren. Als mehrwertige Alkohole kommen z.B. Ethylenglykol, Propandiol-1,2 und -1,3, Butandiol-1,4- und -2,3, Hexandiol-1,6, 2,2,4-Trimethyl-pentandiol-1,3 oder -2,5,Octandiol-1,8, Neopentylglykol, 1,4- oder 1,3-Bishydroxymethylcyclohexan, 2-Methyl-1,3-propanidol, Chinit, 1,4,3,6-Dianhydrohexite, Di-, Tri-, Tetra- und Polyethylenglykol, Di-, Tri- und Tetrapropylenglykol, Di-, Tri- und Tetrapolybutylenglykol in Frage. In untergeordneten Anteilen können auch mehr als zweiwertige Alkohole wie z.B. Glycerin, Trimethylolpropan, Hexantriol-1,2,6, Butandiol-1,2,4, Trimethylolethan, Pentaerythrit oder Sorbit mitverwendet werden. Für die Polyester aus mehr als zweiwertigen Komponenten gilt dabei die Beschränkung Funktionalität, wie sie noch näher ausgeführt werden wird. Auch Polyester aus Lactonen, wie z.B. ε-Caprolacton oder Hydroxycarbonsäuren wei z.B. ω-Hydroxycapronsäuren oder ihre Mischkondensate mit Polycapronsäuren und Polyolen sind einsetzbar. Auch die Hydroxypolyether sind solche der an sich bekannten Art und werden z.B. durch Polymerisation von Tetrahydrofuran und/oder Epoxiden wie Ethylenoxid, Propylenoxid, Butylenoxid, Styroloxid oder Epichlorhydrin mit sich selbst, z.B. in Gegenwart von Bortrifluorid, oder durch Analgerung dieser Epoxide, gegebenenfalls im beliebigen Gemisch oder blockartig nacheinander, an Startkomponenten mit reaktionsfähigen Wasserstoffatomen wie Wasser, Di- oder Polyalkohole, Aminoalkohole oder Amin erhalten. Bekannte Startkomponenten sind z.B. Ethylenglykol, Propandiol-1,2 oder -1,3, Trimethylolpropan, 4,4'-Dihydroxydiphenylpropan, Anilin, Ammoniak, Ethanolamin oder Ethylendiamin. Beispiele sind höhere Polyoxyalkylenpolyole, z.B. Polyoxytetramethylenglykole oder Ethoxylierungs- und/oder Propoxylierungsprodukte von niedermolekularen Di- und Triolen oder Mono- oder Diaminen, z.B. propoxyliertes Trimethylolpropan, lineare oder verzweigte Polyoxypropylenglykolether. Die anteilweise in statistischer, blockartiger oder endständiger Form Ethylenoxid enthalten können. Auch durch Vinylpolymerisate modifizierte Polyether, wie sie z.B. durch Polymerisation von Styrol oder Acrylnitril in Gegenwart von Polyethern entstehen, sowie Polyharnstoffe oder Polyhydrazodicarbonamide enthaltende Polyether sind geeignet, ebenso OH-Gruppen aufweisende Polybutadiene. Als Hydroxylgruppen aufweisende Polycarbonate kommen solche der an sich bekannten Art in Betracht, wie sie z.B. durch Umsetzung von Diolen wie Propandiol-1,3, Butandiol-1,4, Hexandiol-1,6 und/oder Di-, Tri- oder Tetraethylenglykol, mit Dialkylcarbonaten z.B. Diphenylcarbonat oder mit Phosgen hergestellt werden können.

Die höhermolekularen Polyhydroxylverbindungen a) sollen einen Schmelzpunkt unter 60°C,

vorzugsweise unter 45° aufweisen, ein Molekulargewicht von 400 bis 10 000, vorzugsweise 600 bis 6000 besitzen und eine Funktionalität f bzw. f' von 1,9 bis 2,8, vorzugsweise 1,98 bis 2,7 aufweisen.

Die höhermolekularen Polyhydroxylverbindungen a) können gegebenenfalls einen Zustaz von niedermolekularen Di- und/oder Polyolen vom Molekulargewicht 62 bis 399 enthalten. Die Menge der niedermolekularen Polyole, vorzugsweise Diole ist jedoch im allgemeinen auf weniger als 2 Mol niedermolekulare Polyole, vorzugsweise weniger als 1 Mol niedermolekulare Di- oder Polyole pro Mol höhermolekulare Polyhydroxylverbindung beschränkt. Als niedermolekulare Di- oder Polyole seien beispielsweise genannt: 'Ethylenglykol, Propandiol-1,2, Butandiol-1,4, Hexandiol-1,6 oder -2,5, Neopentylglykol, 2,2,4-Trimethyl- pentandiol-1,3, 1,4,3,6-Dianhydrohexite, Diethylenglykol, 4,4'-Dihydroxydicyclohexylpropan oder Trimethylolpropan, Glycerin oder Trimethylolethan.

Der Zusatz der niedermolekularen Verbindungen, insbesondere der trifunktionnelle Polyol ist dahigehend beschränkt, daß auch die Gesamtmischung der höhermolekularen Polyhydroxyverbindungen oder niedermolekularen Polyole in der Mischung eine Gesamtfunktionalität f' ergibt, die die Werte von 2,8 bzw. vorzugsweise 2,7 und insbesondere von 2,65 nicht überschreitet.

Polyhydroxypolyester mit einem Molekulargewicht zwischen 1000 und 4000 (besonders 1500 bis 3000), aus Adipinsäure und gegebenenfalls bis 10 Mol-% (bezogen auf die gesamte Säurekomponente des Polyesters) an Phthalsäure, Isophthalsäure und/oder Terephthalsäure und Glykolen mit 2 bis 10, vorzugsweise 4 bis 6 C-Atomen, sowie ihren Mischungen sowie gegebenenfalls bis zu 4 Mol-%, bevorzugt 0,1 bis 3 Mol-%, bezogen auf die Glykolkomponente des Polyesters, an Triolen, vorzugsweise Trimethylolpropan, werden bevorzugt eingesetzt. Besonders bevorzugt verwendet man dabei Adipinsäurepolyester, bei deren Herstellung so viel Trimethylpropan mitverwendet wurde, daß im Durchschnitt die Funktionalität f' ≤2,2 beträgt. Für den Aufbau dieser Polyester geeignete Glykole sind z.B. Ethylenglykol, Diethylenglykol, Triethylenglykol und Tetraethylenglykol, 1,2-Propandiol, 1,3-Propandiol, Di- und Tripropylenglykol, 1,4-Butandiol, 2,3-Butandiol, 1,5-Pentandiol, Neopentylglykol, 1,6-Hexandiol und 1,8-Octandiol. Man verwendet dabei vorzugsweise ein Gemisch von mindestens zweien dieser Diole im Molverhältnis 1:9 bis 9:1, vorzugsweise 3:7 bis 7:3 an, wobei es insbesondere bevorzugt ist, daß mindestens ein Glykol mit 4 bis 6 C-Atomen eingesetzt wird. Bevorzugt sind Gemische aus einem in der Alkylgruppe verzweigten Glykol mit 4 bis 6 C-Atomen und einem Alkylendiol mit 4 bis 6 C-Atomen, besonders bevorzugt sind Gemische aus 1,6-Hexandiol und Neopentylglykol.

Zur Herstellung der NCO-Propolymeren werden diese mit gegenüber den hydroxylgruppen überschüssigen Mengen an aliphatischen und insbesondere cycloaliphatischen Diisocyanaten umgesetzt. Als aliphatische Diisocyanate sind beispielsweise geeignet; Ethylendiisocyanat, 1,4-Tetramethylendiisocyanat, 1,6-, 1,5- und 1,4-Diisocyanatohexan sowie beliebige Gemische dieser Isomeren, 2,2,4- und 2,4,4-Trimethylhexan-1,6-diisocyanat, 2-Methyl-pentandiisocyanat-1,5, 2-Ethylbutan-diisocycanat-1,4, 5-Methylnonan-1,9-diisocyanat, 1,12-Dodecandiisocyanat, Lysinmethylesterdiisocyanat, insbesondere aber cycloaliphatische Diisocycanate wie 1-Isocyanato-3,3,5-trimethyl-5-isocyanatomethyl-cyclohexan (Isophorondiisocyanat), Cyclohexan-1,3- und -1,4-diisocyanat sowie beliebige Gemische dieser Isomeren, 1-Alkyl-2- oder 1-Alkyl-3-isocyanato-methyl-isocyanatocyclohexane, 2,4- und/oder 2,6-Diisocyanato-1-methylcyclohexan sowie beliebige Gemische dieser Isomeren, 1-Isocyanato-1-methyl-4(3)-isocyantomethylcyclohexan, 2,4'- und/oder 4,4'-Diisocyanatodicyclohexylmethan, 3,3'-Dimethyl-4,4'-diisocycanato-dicyclohexylmethan, 3-Isocyanatomethyl-1-(3-isocycanatopropyl-1-methyl)-4-methyl-cyclohexan sowie 1,8-Para-menthandiisocyant. Bevorzugte Diisocyanate sind cycloaliphatische Diisocyanate, insbesondere Isophorondiisocyanat und/oder 2,4'- und/oder 4,4'-Diisocyanato-dicyclohexylmethan.

Die NCO-Prepolymeren sollen nach ihrer Bildung einen möglichst geringen Gehalt an freien, monomeren aliphatischen oder cycloaliphatischen Diisocyanaten aufweisen, d.h. einen Gehalt <2%, vorzugsweise <1% und insbesondere <0,5% an freien monomeren Diisocyanaten. Dies wird dadurch erreicht, daß man bei der NCO-Prepolymerbildung die gegebenenfalls über ein Molverhältnis von 2:1 (NCO/OH) hinausgehenden Mengen an Diisocyanaten durch Vakuumdestillation, Dünnschichtdestillation oder geeignete Extraktion aus den gebildeten NCO-Prepolymeren wieder entfernt. Das besonders bevorzugte Diisocyanat ist das Isophorondiisocyanat.

In untergeordneten Mengen, d.h. in Mengen von bis zu 15 Gew.-%, vorzugsweise bis zu 5 Gew.-% kann die NCO-Prepolymerbildung unter Zusatz von aliphatischen und insbesondere cycloaliphatischen Polyisocyanaten (Funktionalität >2), vorzugsweise Polyisocyanaten (f ≥3), insbesondere Triisocyanaten erfolgen. Geeignete Isocyanate sind die Biurettriisocyanate, Allophanattriisocyanate oder Trimerisierungsprodukte von aliphatischen bzw. cycloaliphatischen Diisocyanaten wie insbesondere Hexan-1,6-diisocyanat und Isophorondiisocyanat. Weitere Triisocyanate sind beispielsweise 4-Isocyanatomethyl-1,8-octamethylen-diisocyanat oder 1,5,11-Triisocyanatoundecan. Weiterhin sind 1 bis 15 Gew.-% an Polyisocyanaten, vorzugsweise 1 bis 10 und insbesondere 1 bis 5 Gew.-% an Polyisocyanaten einzusetzen, welche neben aromatisch gebundenen NCO-Gruppen nur aliphatisch oder cycloaliphatisch gebundene NCO-Gruppen aufweisen, z.B. Mischtrimerisate aus 3 Mol Toluylendiisocyanat und 2 Mol Hexandiisocyanat oder Isophorondiisocyanat. Bevorzugt enthalten die Polyisocyanate nur eine aromatische Gruppe und daneben nur aliphatisch oder cycloaliphatisch gebundene NCO-Gruppen.

Der NCO-Gehalt der NCO-Prepolymeren soll von 0,5 bis 6,0, vorzugsweise von 2 bis 4,5 Gew.-% liegen, Die mittlere Gesamtfunktionalität f'' der NCO-Prepolymeren A) soll 1,95 bis 2,8, vorzugsweise von 2,0 bis 2,7 betragen. Zur Erhöhung der Funktionalität werden z.B. höherfunktionelle Komponenten mitverwendet,

eine Erniedrigung der Funtionalität kann z.B. durch Zusatz von geringen Mengen an monofunktionellen Komponenten, z.B. Monoalkoholen, asymmetrischem Dimethylhydrazin, 4-Amino-1,2,2,',6,6'-pentamethylpiperidin oder Monohydrazide zur Einstellung von dem gewünschten Gesamtfunktionalitätsbereich f'' erreicht werden.

Die Prepolymeren A) werden flüssiger Form in der Schmelze oder unter Mitverwendung von inerten, organischen Lösungsmitteln mit Siedepünkten bis 150°C wie Ketonen, Estern, Ethern und aromatischen Kohlenwasserstoffen oder Kohlenwasserstoffgemischen, z.B. Aceton, Methylethylketon, Pentanon, Hexanon, Cyclohexanon, Ethylacetat, Isopropylacetat, Methylpropionat, Ethylpropionat, Toluol, Solvesso®-Lösungsmittelgemischen, Diisopropylether, Di-n-propylether, Di-n-butylether, Diisobutylether, Tetrahydrofuran, Furan, Dioxan hergestellt. Anstelle oder umsetzig zu diesen Lösungsmitteln können auch PVC-Weichmacher wie Dibutylphthalat, Dioctylphthalat, Phosphorsäuretrisalkylester oder andere verwendet werden.

Aus techischen Gründen werden die NCO-Prepolymeren in flüssiger Form (aus Schmelze) oder aus hochkonzentrierten, vorzugsweise mindestens 70% Feststoff enthaltenden Lösungen verarbeitet, vorzugsweise beträgt die Konzentration von Lösungen etwa 75 bis 85 Gew.-% Feststoff.

NCO-Prepolymere auf Basis von Hydroxypolyethern, insbesondere auf Basis von oxypropylen- und/oder oxyethylengruppenhaltigen Polyethern, stellen zumeist bei Raumtemperatur flüssige Produkte mit relativ niedriger Viskosität dar und werden vorzugsweise ohne Lösungsmittelzusatz verarbeitet. NCO-Prepolymere auf Polyesterbasis sind zumeist höherviskos oder gar erstarrend und werden daher bevorzugt in Form ihrer Lösungen eingesetzt.

Die Viskosität dieser NCO-Prepolymeren bzw. NCO-Prepolymerlösungen soll im Bereich von 300 bis 100000 mPa.s/25°C, bevorzugt 500 bis 15000 und insbesondere 500 bis 5000 mPas/25°C liegen. Besonders bevorzugte Lösungsmittel sind Ethylacetat, Toluol sowie Methylethylketon.

Die 4,4'- und/oder 2,4'-Diaminotetraalkyl-dicyclohexylalkane B), welche gegebenenfalls auch geringe Mengen an 2,2'-Isomeren enthalten, entsprechen der allgemeinen Formel

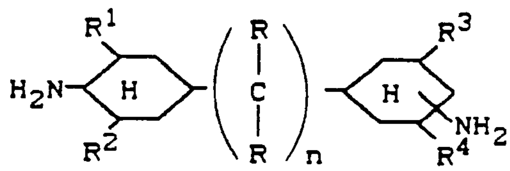

wobei die Position der zweiten Aminogruppe entweder die 2'- oder 4'-Stellung bedeutet. Die Reste $R^1$ bis $R^4$ sind gleich oder verschieden und sind geradkettige oder verzweigte Alkylreste mit 1 bis 4 Kohlenstoffatomen, wie z.B. Methyl, Ethyl, Propyl, Iospropyl, Butyl, Isobutyl oder tert.-Butyl, Bevorzugt sind solche Diamine, bei denen nicht mehr als zwei der Reste $R^1$ bis $R^4$ Methylreste sind. Besonders bevorzugte Vertreter der Diamine stellen Tetraalkylderivate dar, bei denen in den $R^1$- bis $R^4$-Alkylgruppen mindestens zwei C-Atome pro Alkylgruppe enthalten sind. Die Gruppen R stellen unabhängig voneinander Wasserstoff oder Alkylgruppen mit 1 bis 4, vorzugsweise 1 bis 2 C-Atomen dar, jedoch sollen beide Gruppen R an einem Kohlenstoffatom im Alkanrest (R—C—R) zusammen nicht mehr als 4 C-Atome aufweisen, n ist 1, 2 oder 3, bevorzugt ist $n = 1$.

Die Gruppierung CRR stellt bevorzugt den $CH_2$— oder den $C(CH_3)_2$-Rest dar. Die Tetraalkyl-substituierten Diaminodicyclohexylalkane B) können in beliebiger Mischung ihrer Stereoisomeren oder in Form ihrer Gemische der 4,4'- und 2,2'-Diaminoverbindungen vorliegen. Selbstverständlich können Gemische aus verschiedenen Tetraalkyl-substituierten Diaminen eingesetzt werden. Beispiele sind die 4,4'-Diamino- oder 4,2'-Diamino-3,5,3',5'-tetraalkylcyclohexylalkane, z.B. 4,4'-Diamino-3,5,3',5'-tetramethyldicyclohexylmethan, 2,4'-Diamino-3,5,3',5'-tetramethyldicyclohexylmethan, 4,4'-Diamino-(oder 2,4'-Diamino)-3,5,3',5'-tetramethyl-dicyclohexyl-[1,1]-ethan oder -[1,2]-ethan, 4,4'-Diamino-(oder 2,4'-Diamino)-3,5,3',5'-tetramethyldicyclohexyl-[2,2]-dimethylmethan oder -[1,3]-propan, 4,4'-Diamino-(oder 2,4'-Diamino)-3,5,3',5'-tetramethyl-dicyclohexyl-[1-methyl-1-ethyl]-methan.

Die 4,4'-Diamino-3,5,3',5'-tetraalkyl-dicyclohexylalkan-Verbindungen sind vor den entsprechenden 2,4'-Diamino-Verbindungen bevorzugt. Weiterhin sind die Diamine der Dicyclohexylmethan-Reihe vor denen der Dicyclohexyl-[2,2]-dimethylmethan-Reihe bevorzugt. Die 2,4'-Isomeren sind zumeist in den 4,4'-Isomeren als Nebenbestandteile (resultierend aus der Synthese) enthalten. Daneben sind die 2,2'-Isomeren in noch geringerer Menge als Nebenbestandteile enthalten.

Die Reste $R^1$ bis $R^4$ können auch unabhängig voneinander verschiedene $C_1$ bis $C_4$-Alklyreste bedeuten, z.B. 4,4'-Diamino-3,3',5-trimethyl-5'-tert.-butyl-dicyclohexylmethan oder 3,3',5'-Trimethyl-5'-isopropyl-dicyclohexylmethan.

Bevorzugt sind Diaminoteraalkyl-dicyclohexylalkane, bei denen nicht mehr als zwei der Reste $R^1$ bis $R^4$ Methylreste sind, z.B. das 4,4'-Diamino-3,5-dimethyl-3',5'-diisopropyl-dicyclohexylmethan oder das 4,4'-Diamino-3,5-dimethyl-3',5'-diethyl-dicyclohexylmethan.

Besonders bevorzugte Vertreter der Diamine stellen die Tetraalkylderivative mit mindestens jeweils 2 C-Atomen in den $R^1$ bis $R^4$-Alkylgruppen dar, z.B. das 2,4'-Diamino-3,5,3',5'-tetraethyl-dicyclohexylmethan, das 4,4'-Diamino-3,5,3',5'-tetraethyl-dicyclohexyl-[2,2]-dimethylmethan, 4,4'-Diamino-3,5,3',5'-tetraethyl-dicyclohexylmethan oder das 4,4'-Diamino-3,5,3',5'-tetraisopropyl-dicyclohexylmethan.

Die Alkylreste mit mehr als 2 C-Atomen können in den Diaminen auch unterschiedlich sein, z.B. 2,4'-Diamino-3,5-diethyl-3',5'-diisopropyl-dicyclohexylmethan, 4,4'-Diamino-3,5-diethyl-3',5'-diisopropyl-dicyclohexyl-[2,2'-dimethyl]-methan; bevorzugt ist dabei das 4,4'-Diamino-3,5-diethyl-3',5'-diisopropyldicyclohexylmethan.

Diese unsymmetrisch substituierten Dicyclohexylalkan-Diamine können auch ihre symmetrischen Tetraalkylisomeren im Gemisch enthalten, z.B. für die letztgenannte Verbindung das 4,4'-Diamino-3,3',5,5'-tetraethyl- und 3,3',5,5'-tetraisopropyl-dicyclohexylmethan. Diese Gemische ergeben sich z.B. durch Hydrierung der Diamingemische aus der Reaktion von Formaldehyd mit 2,6-Diethylanilin- und 2,6-Diisopropylanilin-Gemischen. Besonders bevorzugt im Verfahren einzusetzende Diamino-dicyclohexylalkane sind das 4,4'-Diamino-3,3',5,'-tetraethyl-dicyclohexylmethan und das 4,4'-Diamino-3,3',5,5'-tetraisopropyl-dicyclohexylmethan.

Die Diamin-Kettenverlängerungsmittel B) werden erfindungsgemäß in einem organischen Lösungsmittel im allgemeinen in Form einer 5 bis 35-gew.-%igen, vorzugsweise 10 bis 25-gew.-%igen Lösung eingesetzt.

Das Lösungsmittel ist frei von Keton- oder Aldehydgruppen. Als Lösungsmittel können auch hier eingesetzt werden; Ester oder Ether der bereits genannten Art, aromatische Kohlenwasserstoffe wie Toluol, bevorzugt wird jedoch das Ethylacetat verwendet.

In einer erfindungsgemäß besonders bevorzugten und technisch besonders vorteilhaften Form werden die Diamin-Kettenverlängerungsmittel B) in Form einer Diamin-Zubereitung eingesetzt. Diese Zubereitung besteht aus Umsetzungsprodukten der Amine mit einem Unterschuß an NCO-Prepolymeren, wobei bis zu 20 Äquivalent-%, vorzugsweise 1 bis 10 Äquivalent-%, insbesondere 1 bis 7 Äquivalent-% der Aminogruppen mit NCO-Gruppen der NCO-Prepolymeren umgesetzt sind. Aus Gründen der Stabilität der Diaminzubereitungen werden vorzugsweise NCO-Prepolymere auf Basis von Hydroxypolyethern (oder Hydroxypolyacetalen oder Hydroxypolythioethern) eingesetzt, da NCO-Prepolymere auf Hydroxypolyesterbasis mit den cycloaliphtischen Diaminen bei Lagerung eine Amidbildung ergeben können. Als Hydroxypolyether (-acetale, -thioether) können die üblichen, z.B. zur Herstellung der NCO-Prepolymere genannten Hydroxypolyetherdiole eingesetzt werden. Als Polyisocyanate werden vorzugsweise die aliphatischen und/oder cycloaliphatischen Diisocyanate eingesetzt, da sie die Lichtechtheit der Reaktivmassen nicht beeinträchtigen, wie dies bei aromatischen Diisocyanaten der Fall ist. Die NCO-Prepolymeren entsprechen vorzugsweise einem Diol/Diisocyanatverhältnis 1:2, oder kleiner, d.h. sie enthalten möglichst wenig freies, monomeres Diisocycanat. Der NCO-Gehalt dieser NCO-Prepolymeren liegt vorzugsweise bei 1 bis 6 Gew.-%, insbesondere 2 bis 4,5 Gew.-%.

Auch die Zubereitungen der Diamine enthalten die genannten Lösungsmittel in solchen Mengen, daß die Reaktivitätsmischung insgesamt nicht mehr als 70 Gew.-% Lösung enthalten.

Der Vorteil der Verwendung der Diamin-Zubereitungen B) liegt im wesentlichen darin, daß die Diamine nicht auskristallisieren, die Zubereitung eine gewisse Schmierwirkung bei den Pumpen oder anderen Dosiergeräten zeigt und eine leicht erhöhte Viskosität besitzt, so daß die Zubereitungen auch Pigmente und Füllstoffe und andere Zusätze stabil dispergiert und sicher dosierbar enthalten.

Sowohl aus Kostengründen als auch aus verfahrenstechnischen Gründen ist es zweckmäßig, beim erfindungsgemäßen Verfahren möglichst wenig Lösungsmittel mitzuverwenden.

Bei Verwendung von Beschichtungssystemen mit relativ wenig Lösungsmittelanteil lassen sich blasenfreie Beschichtungen relativ hoher Dicke pro Auftrag herstellen, wie dies bei Auftrag auf Substraten wünschenswert ist.

Die Menge an Lösungsmitteln im Reaktivsystem kann 0 bis 70 Gew.-% betragen, vorzugsweise werden bis 50 Gew.-% an Lösungsmittel, besonders bevorzugt bis 30 Gew.-% an Lösungsmittel eingesetzt.

Auch bei den Diaminen B) oder den Diaminzubereitungen B) können in begrenzten Anteilen trifunktionelle oder auch gegebenenfalls monofunktionelle Reaktionskomponenten wie Triamine, Triole, Polyole bzw. Monoamine oder Monoalkohole mitverwendet werden, doch sollen die Komponenten B) eine mittlere Funktionalität $\leq 2{,}2$, vorzugsweise $\leq 2{,}1$ insbesondere $\leq 2{,}05$ aufweisen.

Wenn mindestens eine der Komponenten A) oder Komponente B) eine Funktionalität $>2{,}0$ besitzen, so soll der Wert der Summe der Funktionalitäten des Prepolymers und der Amine minus zwei bestimmte Werte nicht über bzw. unterschreiten. Es gilt die Beziehung:

$$f''(A) + f(B) - 2 \xrightarrow[\text{zwischen}]{\text{Werte}} \geq 1{,}95 \text{ und } \leq 2{,}8, \text{ vorzugsweise}$$

$$\geq 1{,}98 \text{ und } \leq 2{,}7, \text{ insbesondere}$$

$$\geq 2{,}0 \text{ und } \leq 2{,}65.$$

Bevorzugt werden in dem Verfahren Beschichtungen hergestellt, welche Schichtdicken von 0,05 bis 5 mm, vorzugsweise 0,10 bis 2,00 mm, vorzugsweise 0,10 bis 0,90 mm aufweisen. Bei Spaltleder wird so im allgemeinen eine Schichtdicke von 0,15 bis 0,85 mm, vorzugsweise 0,2 bis 0,3 mm, bzw. bei geschliffenem Narbenleder eine Dicke von ca. 0,05 bis 0,6 mm, vorzugsweise 0,1 bis 0,2 mm, aufgebracht.

Die Gesamtbeschichtung kann dabei in einen oder auch in mehreren Teilaufträgen aufgebracht werden, wie dies in der Industriepraxis üblich ist. Hohe Schichtdicken werden z.B. auf textilen Substraten z.B. für Transportbänder oder Planenstoffe aufgebracht und können Werte von 1 mm überschreiten z.B. 1 bis 5 mm betragen.

Erfindungsgemäß ist es im allgemeinen bevorzugt, dem zur Beschichtung verwendeten Zweikomponentensystem keinen Polyurethankatalysator zuzusetzen. Arbeitet man jedoch mit Systemen, in welchen das Äquivalentverhältnis zwischen Isocyanatgruppen und Aminogruppen oberhalb 1,3:1, insbesondere oberhalb etwa 1,6:1, liegt und welche daher im Wasser oder Hydroxylverbindungen als zusätzliches Kettenverlängerungsmittel enthalten, dann ist es oft zweckmäßig, an sich bekannte Katalysatoren für die Polyisocyanat-Polyadditionsreaktion mitzuverwenden. Als Katalysatoren kommen z.B. alle an sich bekannten tertiären Amine, Metallsalze und metallorganische Verbindungen in Frage, wie sie in den deutschen Offenlegungsschriften 2 854 384 oder 2 290 501 beschrieben werden. Die Katalysatoren werden im allgeminen in einer Menge von 0,01 bis 1 Gew.-%, bezogen auf gesamtes Zweikomponentenreaktivsystem eingesetzt.

Erfindungswesentlich ist es, daß das Diaminkettenverlängerungsmittel dem Reaktionsansatz eine ausreichende, jedoch nicht zu lange Reaktionszeit bis zum Verquallen verleiht. Es war außerordentlich überraschend, daß mit den erfindungsgemäßen Tetraalkyldicyclohexylalkan-Diaminen in unblockierter Form der Diamine in Kombination mit den NCO-Prepolymeren in unblockierter Form eine günstige Reaktivität erreicht werden kann, die gestattet, daß die Mischung dosiert, vermischt, störungsfrei in den Austragsgeräten verarbeitet und auf das Substrat aufgetragen werden kann, so daß noch ein ausreichender Verlauf der versprühten Masse sowie eine ausreichende Bindung mit dem Substrat erfolgt und erst danach die Massen gelieren und dann schnell zum Polymeren abreagieren.

Entsprechend dem im Beispielteil näher geschilderten Reaktivitätstest sind Mischungen bevorzugt, die in 15 bis etwa 500 Sekunden eine Viskosität von etwa 60000 mPa.s. erreichen und insbesondere für das Verfahren geeignet sind. Besonders bevorzugt sind Zeiten, die zwischen etwa 80 und 180 Sekunden liegen. Wenn die Reaktivitätszeiten unterhalb der geforderten Grenze liegen, so erweisen sich entsprechende Mischungen selbst über die kontinuierlich und in kürzester Zeit vermischende Sprühpistole als nicht mehr verarbeitbar oder ergeben keinen ausreichenden Verlauf und Haftung zum Untergrund. Andereseits machen länger reagierende Reaktivmischungen Schwierigkeiten beim Aufbringen und Eindringen in das Substrat.

Den Reaktionskomponenten, z.B. dem NCO-Prepolymer A) oder der Lösung des Diaminkettenverlängerers bzw. der Diamin-Zubereitung B) setzt man die in der Beschichtungsindustrie überlicherweise verwendeten organischen oder anorganischen Pigmente, Farbstoffe, Stabilisatoren, Antioxidantien, Verlaufmittel oder sonstige Hilfsmittel der Polyurethanchemie zu. Verlaufmittel werden z.B. in einer Menge von 0,01 bis 5 Gew-%, besonders bevorzugt 0,1 bis 3 Gew-%, bezogen auf das gesamte Reaktivkomponentsystem zugesetzt, z.B. alle aus der Lackchemie an sich bekannten Verlaufsmittel wie Tributylphosphat, Ricinolsäureester, fluororganische Verbindungen, Silikone, Polyethersilikone oder Blockmischpolymerisate, welche sowohl Polysiloxanals auch Polyetherreste enthalten. Die Polyethersiloxane weisen im allgemeinen ein Molekulargewicht von 1000 bis 5000 auf.

Beim erfindungsgemäßen Verfahren wird das Zweikomponenten system, wie bereits anfangs erwähnt, durch Sprühen auf die Unterlage aufgetragen, wobei man sich vorzugsweise einer Spritzpistole mit Innenmischung bedient. Vorrichtungen zum Mischen und Auftragen reaktiver, fließfähiger Stoffe, beispielsweise von Zweikomponenten-Polyurethan-Reaktivsystemen bei der Umkehrbeschichtung, sind an sich bekannt. Vorzugsweise benutzt man eine Spritzpistole mit Innenmischung, welche die Nachteile der bisher verwendeten Mischvorrichtungen (geringe Dichtigkeit, Blasenbildung, geringe Mischgüte, hoher Verweilzeiten) nicht aufweist. In dieser Spritzpistole werden die Komponenten zunächst in eine Vormischkammer eingespeist und in einem Gas vorvermischt und dieses Gas-Flüssigkeitsgemisch unmittelbar nach dessen Bildung einer kurzen, druckverlustarmen statischen Mischvorrichtung mit sich kreuzenden Leitblechen unter einem engen Verweilzeitspektrum zugeführt. Dieses erfindungsgemäß bevorzugt zu verwendende Mischaggregat besteht aus einer zylindrischen Mischkammer mit Einspeisstellen für die einzelnen Komponenten des Reaktivbeschichtungssystems und für Gas un einer Austrittsöffnung an der Stirnseite der Mischkammer, wobie die Einspeisestellen für mindestens einen Stoff und für das Intertgas so in der Mischkammer eingebaut sind, daß Stoff(e) und Gas nährungsweise tangential in die Mischkammer von der Mantelfläche her einströmen und die Einspeisestelle(n) für die weiteren Stoffe stromabwärts hin versetzt sind und wobei zwischen Einspeisestellen und Austrittsöffnungen eine statische Mischvorrichtung vorhanden ist. Nit diesen Vorrichtungen wird neben einer sehr guten Vermischung der Komponenten ein enges Verweilzeitspektrum in der Mischkammer erreicht. Eine solche Mischvorrichtung wird beispielsweise in der DE—OS 28 26 232 näher beschrieben. Es sind jedoch alle anderen handelsüblichen Mischvorrichtungen und Sprühpistolen für die Vermischung von PU-Reaktivgemisch für das Verfahren einsetzbar.

Der Auftrag der Reaktivmischung aus dem Mischgerät kann in der Weise erfolgen, maß die Mischvorrichtung an einem Changierschlitten befestigt wird, dessen Bewegungsrichtung senkrecht zu einem darunter befindlichen Transportband verlaüft, das gleichmäßig senkrecht zu der Changierbewgung der Vorrichtung fortbewegt wird. Diese Art der Beschichtung von Substraten aller Art ist beispielsweise beschrieben in "Das Leder", (1974), Seite 162 bis 166.

Wie schon erwähnt, ist das erfindugsgemäße Verfahren sowohl zur Direkt- als auch zu Umkehrbeschichtung der verschiedensten Substrate, insbesondere jedoch von Leder, Spaltleder und textilen Materilien, geeignet. Bei der Direktbeschichtung wird das Zweikomponentreaktivsystem auf die Oberfläche des zu beschichtenden Substrats gesprüht und das so beschichtete Material anschließend in an sich bekannter Weise in einen Trockenkanal eingebracht; bei Leder sollen 100°C und bei textilen Trägern 200°C (160°) Trockentemperatur möglichst nicht überschritten werden. Im allgemeien trocknet man lederhaltige Substrate bei 60 bis 80°C/2 bis 15 Minuten, bevorzugt 3 bis 6 Minuten und textile Substrate bei 120 bis 160°C 1 bis 10 Minuten, bevorzugt 1 bis 4 Minuten lang. Dabei reagiert bzw. härtet die Beschichtung aus und das Lösungsmittel, so vorhanden, verdampft.

Oftmals wird jedoch erfindungsgemäß nach dem Umkehrverfahren gearbeitet, wobei man die üblichen Beschichtungseinrichtungen verwendet, wie sie beispielsweise in "Das Leder", 1974, Heft 9, Seite 162 ff beschrieben werden. Eine entsprechenden Verfahrensweise ist in der DE—OS 28 26 232 beschrieben.

## Beispiele

Vorbemerkung:

Die Berechnung der Funktionalität der eingesetzten Verbindungen, Gemische oder Reaktionsprodukte erfolgt mit Hilfe der folgenden Formeln

I) Umrechnung aus Molekulargewicht und OH-Zahl

$$f = \frac{\text{Molekulargewicht} \times \text{OH-Zahl}}{56 \times 1000}$$

(f = mittlere Funktionalität der Einzelkomponente). (z.B. zur Umrechnung OH-Zahl/Molekulargewicht bei bekannter Funktionalität f von z.B. Polyhydroxylverbindungen)

II) Die mittlere Funktionalität f' von (nicht miteinander reagierenden) Gemischen aus z.B. Polyolen verschiedener Funktionalität f oder aus Polyaminen verschiedener Funktionalität f oder aus Polyisocyanaten verschiedener Funktionalität f, errechnet sich nach der Formel

$$f' = \frac{\Sigma \text{ mol} \times f}{\Sigma \text{ mol}}$$

(f' = molare Funktionalität).

III) f'' ist die sich einstellende (mittlere) Funktionalität von gegebenenfalls verschiedenfunktionellen, miteinander reagierenden Ausgangsstoffen im Produkt (z.B. im NCO-Prepolymer bei Umsetzung von Polyolen mit Polyisocyanat oder bei der Polyesterbildung aus Polycarbonsäuren und Polyolen).

$$f = \frac{\Sigma \text{ val A} - \Sigma \text{ val B}}{\Sigma \text{ mol (A + B)} - \Sigma \text{ val B}}$$

wobei A die Überschußkomponente darstellt (z.B., die Polyole bei der Herstellung von Hydroxypolyestern oder die Polyisocyanate bei der Herstellung von NCO-Prepolymeren).

val sind Äquivalente (f, val Endgruppen sind in einem mol einer mehrfunktionellen Verbindung enthalten).

Herstellung der NCO-Prepolymeren.

Prepolymer A

In einem Reaktor werden 666 g 1-Isocyanato-3-isocyanatomethyl-3,5,5-trimethylcyclohexan (Isophorondiisocyanat) vorgelegt. Bei Raumtemperatur werden unter Rühren 850 g eines Hydroxyl-Polyesters aus Adipinsäure, Neopentylglykol und Hexandiol-1,6 (35/65) mit einer Hydroxylzahl von 66 und einer Funktionalität von f = 2 zugegeben. Man erwärmt die Reaktionsmischung 7 h bei 80°C bis ein NCO-Gehalt von 13,8% erreicht ist. Dann wird das Reaktionsgemisch bei 180°C/0,13 mbar im Dünnschichtverdampfer destilliert. Das resultierende Harz wird mit Ethylacetat entsprechend einer 80%igen Lösung verdünnt. Die Prepolymer-Lösung hat bei 23°C eine Viskosität von 1200 mPa.s, einen NCO-Gehalt von 3,0% und einen Gehalt an freiem Isophorondiisocyanat von 0,4%. Daraus berechnet sich ein NCO-Äquivalentgewicht von 1400 g. Die Funktionalität f'' ist 2.

NCO-Prepolymer B

In einem Reaktor werden 2775 g Isophorondiisocyanat (IPDI) vorgelegt. Bei Raumtemperatur wird unter Rühren ein Gemisch aus 2000 g eines Hydroxylpolyethers auf Basis von Propandiol-1,2 und Propylenoxid mit einer Hydroxylzahl von 56 und einer Funktionalität f = 2 und einem Molekulargewicht von 2000 und 3000 g eines Hydroxylpolyethers auf Basis von Glycerin und Propylenoxid mit einer

Hydroxylzahl von 56, einem Molekulargewicht von 3000 und einer Funktionalität f = 3 zugegeben und 6 h bei 100°C bis zu einem NCO-Gehalt von 10,8% umgesetzt. Nach Dünnschichtdestillation des Reaktionsgemisches bei 180°C/0,1 Torr erhält man ein Prepolymer mit einer Viskosität bei 23°C von 7700 mPa.s, einem NCO-Gehalt von 3,0% und einem Gehalt an freiem Isophorondiisocyanat von 0,4%. Das NCO-Äquivalentgewicht beträgt 1400 g. Die Funktionalität f'' des Prepolymers ist 2,5 (ohne Berücksichtigung der geringen Restmenge an IPDI nach Dünnschicht-Destillation zur Entfernung überschüssigen IPID's).

NCO-Prepolymer C

In einem Reaktor werden 582 g 1-Isocyanato-1-methyl-4(3)-isocyanatomethyl-cyclohexan (I) (Isomerengehalt = 80/20) vorgelegt. Bei Raumptempertur werden 2550 g der Polyester, wie für Prepolymer A beschrieben, jedoch mit OH-Zahl 56, zugegeben. Die Reaktionsmischung wird erwärmt und 4 Stunden bei 60°C umgesetzt. Danach steigert man die Temperatur auf 80°C und läßt bis zur NCO-Konstanz nachreagieren. Anschließend wird durch Zugabe von 783 g Ethylacetat, entsprechend einer 80%igen Lösung, verdünnt. Die Prepolymer-Lösung hat bei 23°C eine Viskosität von 2050 mPas.s, einen NCO-Gehalt von 3,18% und einen Gehalt an freiem Diisocyanat I von 0,35%. Das berechnete NCO-Äquivalentgewicht beträgt 1320 g, die Funktionalität f'' = 2.

NCO-Prepolymer D

In einem Reaktor werden 388 g 1-Isocyanato-1-methyl-4(3)-isocyanatomethyl-cyclohexan (I) (Gemisch der Isomeren im Verhältnis von etwa 80:20) bei Raumtemperatur unter Rühren mit einem Gemisch aus 800 g eines Hydroxylpolyethers auf Basis von Propandiol-1,2 und Propylenoxid mit einer Hydroxylzahl von 56 und einem Molekulargewicht von 2000 und 1200 g eines Hydroxypolyethers auf Basis von Glycerin und Propylenoxid mit einer Hydroxylzahl von 56 und einem Molekulargewicht von 3000 zugegeben und bei 90°C bis zu einem NCO-Gehalt von 3,3% umgesetzt. Das Prepolymer hat eine Viskosität von 5100 mPa.s und einen Gehalt an freiem Diisocyanat I von 0,32%. Das berechnete NCO-Äquivalentgewicht beträgt 1273 g. Die Funktionalität des Prepolymers ist f'' = 2,5.

NCO-Prepolymer E

In einem Reaktor werden 378,3 g 1-Isocyanato-1-methyl-4(3)-isocyanato-methylcyclohexan (I) und 39,1 g eines Trimer-Polyisocyanats auf Basis 1,6-Diisocycanatohexan mit einem NCO- Gehalt von 21,5% vorgelegt. Bei Raumtemperatur werden nun 1750 g des bifunktionellen Polyesters aus Prepolymer A (OHZ 56) zugegeben und nach Erwärmen auf 65°C 5 Stunden umgesetzt. Danach wird die Temperatur auf 80°C gebracht und man läßt bis zur NCO-Konstanz abreagieren. Anschließend wird durch Verdünnen mit 541.9 g Ethylacetat der Feststoffgehalt auf 80% gebracht. Die Prepolymer-Lösung hat bei 23°C eine Viskosität von 2430 mPa.s, ein NCO-Gehalt von 2,9% und einen Gehalt an freiem Diisocyanat I von 0,45%. Das berechnete NCO-Äquivalentgewicht beträgt 1449 g; f'' = 2,06.

NCO-Prepolymer F—H (allgemeine Vorschrift)

In einem Reaktor wird ein Gemisch aus Isophorondiisocyanat (IPDI) und einer 60%igen Lösung eines Polyisocyanurats aus einem Gemisch von 3 Mol 2,4-Diisocyanatotoluol und 2 Mol 1,6-Diisocyanatohexan, in Ethylacetat (NCO-Gehalt 10,5%) mit dem Hydroxyl-Polyester OHZ 56 aus Prepolymer A analog Prepolymer A umgesetzt, destilliert und 80%ig in Ethylacetat gelöst.

| Prepolymer | IPDI | Polyisocyanurat | Polyester | 80 %ige Lösung | | | |
|---|---|---|---|---|---|---|---|
| | [g] | | | NCO[%] | Viskosität[mPa.s] | fr.IPDI [%] | NCO-Äquiv. [g] |
| F | 5000 | 83 | 3920 | 2.88 | 1400 | 0.21 | 1458 |
| G | 5000 | 260 | 3920 | 2.81 | 2100 | 0.12 | 1495 |
| H | 5000 | 414 | 3920 | 2.69 | 2780 | 0.25 | 1561 |

Prepolymer I (Vergleich)

In einem Reaktor wird eine Lösung aus 658 g Isophorondiisocyanat und 125 g Polyisocyanurat-Lösung (NCO: 10,5%) aus Beispiel E in 792 g Ethylacetat mit 2400 g Polyester aus Beispiel A (OHZ 56) versetzt. Man erwärmt auf 80°C und läßt 4 Stunden bis zu einem NCO-Gehalt von 3,4% abreagieren. Die 80%ige Lösung weist eine Viskosität bei 23°C von 3100 mPa.s und einen Gehalt an freiem Isophorondiisocyanat von 3.7% auf. Das berechnete Äquivalentgewicht beträgt 1235 g.

Prepolymer K (Vergleich)

In einem Reaktor wird zu einer Lösung aus 530 g eines 65:35-Gemisches aus 2,4- und 2,6-Diisocyanatotoluol und 135 g der Polyisocyanauratlösung (NCO: 10,5%) aus Beispiel E in 800 g Toluol bei Raumtemperatur mit 2534 g Polyester aus Beispiel A (OHZ 56) gegeben. Die Reaktionsmischung wird bei 80°C bis zu einem konstanten NCO-Gehalt von 3,25% umgesetzt. Die 80%ige Prepolymer-Lösung hat eine Viskosität bei 23°C von 4300 mPa.s. Das berechnete NCO-Äquivalentgewicht beträgt 1295 g.

Die dem erfindungsgemäßen Verfahren zugrundeliegenden Amingemsiche werden im folgenden als "Härter" bezeichnet.

Härter 1

266 g 3,3',5,5-Tetramethyl-4,4'-diamino-di-cyclohexyl-methan werden mit 934 g Ethylacetat vermischt. $NH_2$-Äquivalentgewicht der Lösung: 600 g.

Härter 2

Lösung aus 294 g 3,3'-Diethyl-5,5'-dimethyl-4,4'-diamino-dicyclohexyl-methan in 906 g Ethylacetat. $NH_2$-Äquivalentgewicht der Lösung: 600 g.

Härter 3

322 g 3,3',5,5'-Tetraethyl-4,4'-diamino-dicyclohexylmethan werden in 878 g Ethylacetat gelöst. $NH_2$-Äquivalentgewicht der Lösung: 600 g.

Härter 4 (Vergleich)

Lösung von 238 g 3,3'-Dimethyl-4,4'-diamino-dicyclohexylmethan in 962 g Ethylacetat. $NH_2$-Äquivalentgewicht der Lösung: 600 g.

Härter 5 (Vergleich)

Die Lösung von 238 g 3,3'-Dimethyl-4,4'-diamino-dicyclohexylmethan in 962 g Methylethylketon wurd 4 h unter Rückfluß erhitzt. $NH_2$-Äquivalentgewicht der Lösung: 600 g (in teilweise blockierter Form).

Härter 6 (Vergleich)

Lösung von 170 g 3,3,5'-Trimethyl-5-amino-methyl-cyclohexylamin (IPDA) in 1030 g Ethylacetat. $NH_2$-Äquivalentgewicht der Lösung: 600 g.

Härter 7 (Vergleich)

Eine Mischung aus 170 g IPDA, 13 g Wasser und 417 g Methylethylketon wird 2 h unter Rückfluß gekocht und danach abgekühlt. $NH_2$-Äquivalentgewicht der Lösung: 300 g (analog DE—OS 26 37 115, Härter 1).

| Härter / Prepolymer | 1 | 2 | 3 | 4 (Vergleich) | 5 (Vergleich) | 6 (Vergleich) | 7 (Vergleich) |
|---|---|---|---|---|---|---|---|
| A | 115" | 118" | 117" | <5" | >900" | <5" | >900" |
| B | 123" | 118" | 128" | <5" | >900" | <5" | >900" |
| C | 165" | 165" | 172" | <5" | >900" | <5" | >900" |
| D | 170" | 168" | 175" | <5" | >900" | <5" | >900" |
| E | 167" | 162" | 167" | <5" | >900" | <5" | >900" |
| F | 177" | 175" | 183" | <5" | >900" | <5" | >900" |
| G | 126" | 126" | 130" | <5" | >900" | <5" | >900" |
| H | 115" | 120" | 120" | <5" | >900" | <5" | >900" |
| I (Vergleich) | 72" | 73" | 71" | <5" | 408" | <5" | 270" |
| K (Vergleich) | <5" | <5" | <5" | <5" | 639" | <5" | 130" |

Reaktivitätstest

In einem 500 ml Probenbecher werden 0,108 val NCO-Prepolymer mit der entsprechenden Gewichtsmenge Toluol (zu einer 40%igen Lösung bei den Prepolymeren Bsp.: A, C, E—K und 50%ige Lösung bei Prepolymeren Bsp.: B, D) verdünnt und mit 0,1 val Härterlösung bei Raumtemperatur (23°C) 10 Sekunden mit einem Glasstab von Hand durchmischt. Danach wird der Viskositätsanstieg (Haake Viskosimeter — Prüfkörper E 100) der Reaktionsmischung in Abhängigkeit von der Zeit gemessen.

In der folgenden Tabelle ist die für das erfidungsgemäße Verfahren wesentliche Zeit (sec) in der die Reaktionsmischung eine Viskosität von 60 000 mPa.s erreicht, aufgeführt.

Anwendungsbeispiele

Testverfahren (Labor-Reaktiv-Beschichtungen un ihre Prüfung)

Die Beurteilung der Verarbeitungsfähigkeit von NCO-Prepolymeren und Diaminen nach dem Reaktivbeschichtungsverfahren kann in einem Labor-Testverfahren vorgenommen werden.

Dazu wird von einer Rezeptur ausgegangen, wie sie bereits im "Reaktivitätstest" angegeben wurde.

Das NCO-Prepolymer wird — im Falle eines Polyetherprepolymeren — durch Verdünnen mit Toluol im Verhältnis 1:1 auf eine Konzentration von 50% Feststoff, bzw. im Falle eines NCO-Polyesterprepolymeren auf eine Konzentration von 40 Gew.-% Feststoff gebracht. Die Diaminkomponente wird in Ethylacetat in einer solchen Gewichtskonzentration gelöst, daß 600 g Lösung genau einem Äquivalent $NH_2$ entsprechen. Bei der Konzentrationsangabe handelt es sich um eine willkürliche Festsetzung, die jedoch in diesem Falle durchgehend eingehalten wird. In die Diaminlösung können gegebenenalls weitere Komponenten wie beispielsweise Schmierstoffe, Verlaufmittel und Farbträger eingearbeitet werden.

Für die Ausprüfung wird die Diaminolösung bzw. ihre Zubereitung jedoch in Regelfall ohne Farbträger eingesetzt.

Die beiden Reaktionspartner werden — wie bereits im Reaktivitätstest angegeben — im Verhältnis von 1,08 Äquivalent NCO zu 1,00 Äquivalent $NH_2$ umgesetzt.

Rezepturbeispiel:

100 g eines NCO-Prepolymeren mit 1,7% NCO werden mit 22,5 g einer Diaminzubereitung mit einer Diaminkonzentration von 1 Äquivalent = 600 g umgesetzt.

Dazu werden die Komponenten innerhalb von 10 Sekunden mit einem Glasstab von Hand durch Rühren intensiv vermischt unf auf einer Glasplatte zu einer blasenfreien Schicht homogener Schichstärke ausgegossen. Innerhalb von mindestens 12 bis 24 Stunden werden dann die enthaltenen Lösungsmittelgemische bei Raumtemperatur abgedunstet. Anschließend wird 2 Studen bei 80° nachgeheizt und der Film vorsichtig von der Platte abgelöst. Von diesem Film wird gemäß DIN 53 328 die Reißkraft, die Bruchdehnung, sowie in Anlehnung an DIN 53 329 die Weiterreißfestigkeit bestimmt. Hierbei werden beispielsweise folgende Werte erreicht:

Tabelle

| NCO-Prepolymer | Diamin | Bruchdehnung (%) | Bruchkraft ($N/mm^2$) | Weiterreißfestigkeit (dN/cm) |
|---|---|---|---|---|
| A | Härter 1 | 593 | 194 | 44,2 |
| A | Härter 2 | 505 | 87 | 33,8 |
| A | Härter 3 | 521 | 162 | 46,5 |
| B | Härter 1 | 620 | 109 | 27,7 |
| B | Härter 2 | 556 | 105 | 9,0 |
| B | Härter 3 | 533 | 108 | 10,1 |

Anwendung in technischen, kontinuierlichen Verfahren

In der Praxis wird das Verfarhren aus speziellen Anlagen ausgeführt, die nach dem Stand der Technik vorsehen, daß die PU-Reaktivmischung im Sprühverfahren in zwei oder mehr aufeinander folgenden Teilaufträgen erfolgt. Diese Aufteilung hat im wesentlichen anwendungstechnische Gründe und ändert

nichts an den chemischen Voraussetzungen, gestattet aber, daß wahlweise der Schichtaufbau auch Unterschiede in der Rezeptur der Einzelaufträge aufweisen kann.

Die Pistolenspritzmaschinen weisen als Hauptbestandteile je einen heizbaren Vorratsbehälter für das Vorpolymerisat, einen Vorratsbehälter für den Härter, jeweils eine Dosiervorrichtung für Härter und Vorpolymerisat und zum äußeren Mischen und Verstäuben der Komponenten eine PU-Zwei-Komponente Sprühpistole mit einer konzentrierten Düse, einer Zuführung für das Vorpolymerisat, einer Zuführung für den Härter und einer Zuführung für Druckluft auf.

Das Vorpolymerisat A wird in den beheizbaren Vorratsbehälter gegeben und zwecks Ernierdrigung seiner Viskosität auf 60°C erwärmt. Die Härtermischung 1 wird gegebenenfalls zusammen mit Pigment in den für sie bestimmten Behälter gegeben. Über getrennte Schläuche mit dazwischenliegenden Dosiervorrichtungen werden Vorpolymerisat und Härter im Verhältnis ihrer Äquivalentgewichte in die Pistole gefördert. Die Fördermenge ist variierbar und richtet sich nach gewünschten Auflagestärken, Spritzbreite und Geschwindigkeit des Bandes, auf dem das zu beschichtende Substrat (Textil, Spaltleder) unter der Spritzpistole hindurch transportiert wird. Am Austritt der Pistole werden die beiden Komponenten durch den mit der Preßluft (Betreibsdruck 4,5 $kg/cm^2$) erzeugten Luftwirbel vermischt. Die Pistole wird zur wechselnden Abgabe in einer Breite von 150 cm etwa 28—82 mal pro Minute hin und her bewegt.

Unter der Pistole läßt man bei Unkehrverfahren z.B. eine mit Silkonkautschuk beschichtete Matrize oder andere Trennträger, die beispielsweise den Abdruck von natürlichem Leder tragen, mit einer Geschwindigkeit von etwa mindestens 1,6 m/Minute durchlaufen. Die auf den Trennträger gesprühte Masse verlaüft filmartig und beginnt nach nach etwa 1 Minute vom Zeitpunkt des Aufsprühens an gerechnet, abzubinden. Auf die reagierende Masse wird z.B. das zu beschichtende Spaltleder gelegt und angedrückt. Die gesamte Beschichtung passiert anschließend einen auf 80°C geheizten Trockenkanal. Nach etwa 6 Minuten, vom Zeitpunkt des Aufsprühens an gerechnet, wird die Beschichtung klebfrei vom Trennträger abgezogen.

Das beschichtete Material hat eine natürlichem Leder sehr ähnliche Narbung, ist nach kurzer Zeit stapelbar und auf gängigen Schuhmaschinen verarbeitbar. Die Haftung zwischen Beschichtung und z.B. Spaltleder ist ausgezeichnet, der Griff angenehm trocken.

Die beschichteten Leder überstehen den Flexometertest

1. trocken mit über 100 000 Knickungen ohne Beschädigung
2. naß mit über 100 000 Knickungen ohne Beschädigung
3. bei −25°C mit weit mehr als 10 000 Knickungen ohne Beschädigung.

Rezepturbeispiel

Rezeptur I:

100 g NCO-Prepolymer A) mit NCO = 3,0 werden mit 40 g Aminhärterlösung mit 600 g = 1 val Diamin, 4 g Farbpigmentzubereitung schwarz (10% bezogen auf Aminansatz) umgesetzt und in 2 Teilaufträge auf eine Matrize aufgespritz und zwar in einer Gesamtauftragsmenge von 300 $g/m^2$ an NCO-Prepolymer.

Bei einer üblichen Arbeitsgeschwindigkeit von 4 m/min und einer Auftragsbreite von 1,5 m werden demnach 1800 g NCO-Prepolymer A pro Minute insgesamt ausgetragen. In die noch reagierende Polyurethanharnstoffmasse wird nach bekannten Verfahren Spaltleder einkaschiert und nach einer Verweilzeit von z.B. 6 Minuten bei 80°C in einem Trockenkanal vom Trennträger abgezogen.

Das auf diese Weise nach dem Umkehrverfahren beschichtete Spaltleder weist eine trockene Oberfläche auf und hat das vom Trennträger vorgegebene Narbenbild.

Nach 3 Tagen wird die Haltbarkeit des beschichteten Spaltes auf einem Bally-Flexometer geprüft. Es werden mindestens erreicht:

100 000 Knickungen trocken
100 000 Knickungen naß und
10 000 Knickungen bei Kälte von −20°C.

Rezeptur II:

Wie Rezeptur I, jedoch werden anstelle von 10% eines Schwarzpigmentes 15% einer braunen Eisenpigmentzubereitung eingesetz, d.h. 100 g Prepolymer B mit 3% NCO, 40 g Aminhärterlösung 3 mit 600 g $NH_2$ und 6 g Pigmentzubereitung (mit 15% Pigment bezogen auf Härterzubereitung).

Wie oben unter Rezeptur I wird beschichtet unter Anwendung einer gleichen NCO-Prepolymerauftragsmenge von 300 $g/m^2$ in 2 Teilaufträgen. Es wird ein beschichteter Spalt mit brauner Farbe und mit den oben angegebenen Flexometerwerten erreicht.

Rezepturbeispiel III:

In Analogie zur Rezeptur I und II wird eine Beschichtung in weißer Farbe unter Verwendung einer $TiO_2$-Weißpigmentzubereitung durchgeführt, wobei der Pigmentantiel in einer Menge von 20 Gew.-%, bezogen auf Härterzubereitung, eingesetz wird, demnach:

100 g NCO-Prepolymer A mit einem NCO-Gehalt von 3,0% NCO,
40 g Aminhärter 3 und 8 g Weißpigmentzubereitung.

Es resultiert ein weiß beschichteter Spalt, der auch die unter I angegebenen Flexometerwerte erreicht.

Rezepturbeispiel IV:

Die Teilaufträge unterscheiden sich in der Weise, daß nur der erste Teilauftrag, wie unter Beispiel I aufgeführt, pigmentiert ist und der zweite Teilauftrag unpigmentiert bleibt, d.h. Schicht a)

100 g NCO-Prepolymer A mit 3,0% NCO,
40 g Aminhärter 1 ($NH_2$-Gehalt in 600 g = 1 Äquivalent)
4 g Schwarzpigmentzubereitung (10 Gew.-%, bezogen auf Amin) und

Schicht b)

100 g NCO-Prepolymer A
40 g Aminhärter 1, ohne Pigment

in jedem Teilauftrag werden wie in Beispielen zuvor 900 g pro Minute NCO-Prepolymer A und die entsprechende Aminhärtemenge. Es resultiert ein schwarz beschichtetes Spaltleder, das ebenfalls die unter 1 genannten Flexometerwerte erreicht. Die angführten Flexometerwerte sind Durchschnittswerte, die jedoch in der Regel überschritten werden. Die Prüfung wurde nach der angegebenen Knickzahl abgebrochen.

**Patentansprüche**

1. Verfahren zur Herstellung von lichtechten, lösungsmittelbeständigen Polyurethanharnstoff-Elastomerbeschichtungen auf Substraten oder Umkehrträgern durch Umsetzung von NCO-Prepolymeren mit Diaminen in einem Reaktivverfahren unter kontinuierlicher Vermischung und kontinuierlichem Austrag der Reaktivmischung, dadurch gekennzeichnet, daß man

A) NCO-Prepolymere aus

a) höhermolekularen Polyhydroxylverbindungen mit Molekulargewichten von 400 bis 10000, vorzugsweise 600 bis 6000,

ab) gegebenenfalls unter Zusatz von niedermolekularen Polyolen vom Molekulargewicht 62 bis 390, wobei die Gesamtfunktionalität f bzw. f' der Polyhydroxyverbindungen a) + ab) 1,90 bis 2,8, beträgt, und

b) aliphatischen Di- und gegebenenfalls mehrfunktionellen Polyisocyanaten, wobei die Isocyanate b) aus

1. 85 bis 100 Gew.-% aliphatischen und insbesondere cycloaliphatischen Diisocyanaten, gegebenenfalls unter Zusatz von

2. 15 bis 0 Gew.-% mehrfunktionellen Polyisocyanaten, vorzugsweise Polyisocyanaten einer mittleren Funktionalität $\geq 3$

wobei der NCO-Endgruppen-Gehalt der NCO-Prepolymeren von 0,5 bis 6 Gew.-%, die Gesamtfunktionalität f'' der Prepolymeren A) 1,95 bis 2,8,

und der Gehalt an monomeren Diisocyanaten im NCO-Prepolymeren <2 Gew.-%, beträgt, und die NCO-Prepolymeren A) in flüssiger Form oder gegebenenfalls gelöst in

c) inerten, organischen Lösungsmitteln mit Siedepunkten bis 150°C, vorzugsweise Methylethylketon, Ethylacetat, Toluol oder Dialkylethern, zu mindestens 70 Gew.-% Feststoff enthaltenden Lösungen, mit

B) 2,4' und/oder 4,4'-Diamino-3,3',5,5'-tetraalkyl-dicyclohexylalkanen der Formel

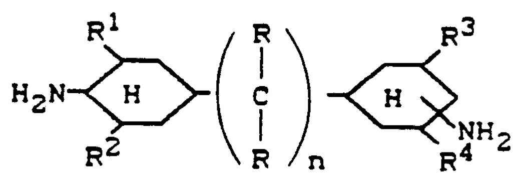

wobei die Positionen der zweiten Aminogruppe entweder die 2'- oder 4'-Stellung bedeutet, worin

$R^1$ bis $R^4$ gleichartig oder unabhängig voneinander geradkettig oder verzweigte Alkylreste mit 1 bis 4 Kohlenstoffatomen, wie Methyl, Ethyl, Propyl, Isopropyl, Butyl, Isobutyl, tert.-Butyl, vorzugsweise $R^1$ bis $R^4$ Ethyl oder Isopropyl, oder $R^1/R^2$ = Ethyl, $R^3$, $R^4$ = Isopropyl bedeutet

R H, $CH_3$, $C_2H_5$ gegebenenfalls $C_3H_7$ oder $C_4H_9$ bedeutet, insgesamt im Rest

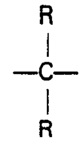

die Reste R zusammen jedoch nicht mehr als 4 C-Atome aufweisen, und

n 1, 2 oder 3 bedeutet,

und/oder in Form von Diamin-Zubereitungen aus Umsetzungsprodukten dieser Diamine mit im wesentlichen difunktionellen NCO-Prepolymeren in Mengen von bis zu 20 Äquivalent-% der Aminogruppen,

gelöst in Lösungsmitteln, welche keine Aldehyd- oder Keton-Carbonylgruppen besitzen, vorzugsweise gelöst in Ethylacetat, gegebenenfalls unter Zusatz von Wasser oder Alkoholen in Mengen von mindestens 1 Mol Wasser und/oder Alkoholen pro $NH_2$-Gruppe

in $NCO/NH_2$-Äquivalentverhältnissen von A):B) = 4,0:1 bis 0,85:1, umsetzt und

in kontinuierlicher, getrennter Dosierung die Komponenten A) und B) in einem Hochleistungsmischgerät vermischt, unter kontinuierlichem Austrag die reaktivmischung auf das gewünschte Substrat oder auf einen intermediären Träger in einer oder mehreren, aufeinanderfolgenden dünnen Schichten aufträgt, anschließend das Substrat in die noch reagierende Schicht einlegt, und gegebenenfalls bei erhöhter Temperatur Lösungsmittel entfernt.

2. Verfahren nach Anspruch 1, dadurch gekennzeichnet, daß die Diisocyanate Ab) Isophorondiisocyanat und/oder 2,4'- und/oder 4,4'-Diisocyanato-dicyclohexylmethan sind.

3. Verfahren nach Anspruch 1 und 2, dadurch gekennzeichnet, daß die NCO-Prepolymeren A) 2 bis 4,5% NCO-Endgruppen enthalten, die Gesamtfunktionalität f'' 2,0 bis 2,7 beträgt und der Gehalt an monomeren Diisocyanaten <1 Gew/-% liegt.

4. Verfahren nach Ansprüche 1 bis 3, dadurch gekennzeichnet, daß in den 4,4'- und/oder 2,2'-Diaminotetraalkyldicyclohexylalkanen B) der Rest

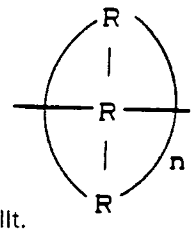

den $—CH_2—$ oder $—C(CH_3)_2$-Rest darstellt.

5. Verfahren nach Ansprüchen 1 bis 4, dadurch gekennzeichnet, daß in den Diaminen B) nicht mehr als zwei der Reste $R^1$ bis $R^4$ Methylreste sind.

6. Verfahren nach Ansprüchen 1 bis 5, dadurch gekennzeichnet, daß das Diamin B) das 4,4'-Diamino-3,3',5,5'-tetraethyl-dicyclohexylmethan ist.

7. Verfahren nach Ansprüchen 1 bis 6, dadurch gekennzeichnet, daß man die Diamine B) in Form von Diamin-Zubereitungen aus Umsetzungsprodukten dieser Diamine mit im wesentlichen difunktionellen NCO-Prepolymeren, aus Hydroxypolyethern und organischen Diisocyanaten, in NCO-Mengen von bis zu 20 Äquivalent-% der Aminogruppen verwendet.

**Revendications**

1. Procédé pour l'application de revêtements d'élastomères de polyuréthannes-urées solides à la lumière, résistant aux solvants, sur des supports finals ou des supports provisoires, par réaction de prépolymères à groupes NCO avec des diamines dans un mode opératoire avec réaction des composants, mélange continu et évacuation continue de mélange réactif, caractérisé en ce que l'on fait réagir

A) des prépolymères à groupes NCO de

a) des composés polyhydroxylés à haut poids moléculaire, de poids moléculaire 400 à 10 000, de préférence 600 à 6 000,

ab) éventuellement avec adjonction de polyols à bas poids moléculaire, de poids moléculaire 62 à 390, la fonctionnalité globale f ou f' respectivement des composés polyhydroxylés (a + ab) allant de 1,90 à 2,8 et

b) des polyisocyanates aliphatiques di- et le cas échéant poly-fonctionnels, les isocyanates b) consistant en

1) 85 à 100% en poids de diisocyanates aliphatiques et plus spécialement cycloaliphatiques, éventuellement avec adjonction de

2) 15 à 0% en poids de polyisocyanates polyfonctionnels, de préférence des polyisocyanates à une fonctionnalité moyenne supérieure ou égale à 3,

la teneur en groupes terminaux NCO des prépolymères à groupes NCO allant de 0,5 à 6% en poids, la fonctionnalité globale f'' des prépolymères A allant de 1,95 à 2,8,

la teneur en diisocyanates monomères du prépolymère à groupes NCO étant inférieure à 2% en poids, et les prépolymères à groupes NCO A étant à l'état liquide ou éventuellement en soluiton dans

c) des solvants organiques inertes dont les points d'ébullition vont jusqu'à 150°C, de préférence la méthyléthylcétone, l'acétate d'éthyle, le toluène ou un éther dialkylique, à l'état de solutions contenant au moins 70% en poids de matières solides, avec

B) des 2,4'- et/ou 4,4'-diamino-3,3',5,5'-tétraalkyldicyclohexylalcanes de formule

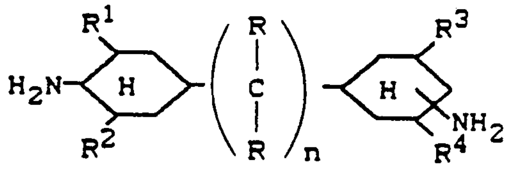

dans laquelle le deuxième groupe amino est en position 2' ou 4' et les symboles $R^1$ à $R^4$, ayant des significations identiques ou différentes, représentent chacun, indépendamment les uns des autres, des groupes alkyle à chaîne droite ou ramifiée en $C_1$—$C_4$ tels que méthyle, éthyle, propyle, isopropyle, butyle, isobutyle, tert-butyle, de préférence des groupes éthyle ou isopropyle, ou bien $R^1/R^2$ = éthyle, $R^3$, $R^4$ = isopropyle, R représente H, $CH_3$, $C_2H_5$, éventuellement $C_3H_7$ ou $C_4H_9$ mais au total, dans le groupe

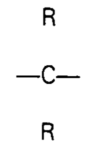

les groupes R, ensemble, ne contiendront pas plus de quatre atomes de carbone, et

n est égal à 1, 2 ou 3,

et/ou, sous forme de compositions de diamines consistant en produits de réaction de ces diamines avec des prépolymères à groupes NCO essentiellement difonctionnels en quantité allant jusqu'à 20 équivalents % des groupes amino,

en solution dans des solvants qui ne contiennent pas de groupe carbonyle aldéhydique ou cétonique, de préférence en solution dans l'acétate d'éthyle, éventuellement avec adjonction d'eau ou d'alcools en quantités d'au moins 1 mole d'eau et/ou d'alcools par groupe $H_2$, à des rapports entre les équivalents de $NCO/NH_2$ de A):B) = 4,0:1 à 0,85:1 et

avec alimentation dosée continue séparée des composants A) et B), on les mélange dans un appareil de mélange à forte puissance, on évacue en continu le mélange réactif sur le support voulu ou sur un support intermédiaire en une ou plusieurs couches minces successives et on insère alors ensuite le support final dans la couche encore en cours de réaction et, le cas échéant, on élimine les solvants à chaud.

2. Procédé selon la revendication 1, caractérisé en ce que les diisocyanates Ab) sont l'isophorone-diisocyanate et/ou le 2,4'- et/ou le 4,4'-diisocyanatodicyclohexylméthane.

3. Procédé selon la revendications 1 et 2, caractérisé en ce que les prépolymères à groupes NCO A) contiennent de 2 à 4,5% de groupes terminaux NCO, la fonctionnalité global'e f'' va de 2,0 à 2,7 et la teneur en diisocyanates monomères est inférieure à 1% en poids.

4. Procédé selon la revendications 1 à 3, caractérisé en ce que , dans les 4,4'- et/ou 2,2'-diaminotétra-alkyl-dicyclohexylalcanes B), le groupe

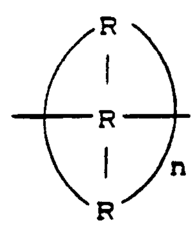

est un groupe $—CH_2—$ ou $—C(CH_3)_2—$.

5. Procédé selon la revendications 1 à 4, caractérisé en ce que, dans les diamines B), pas plus de deux des symboles $R^1$ à $R^4$ représentent des groupes méthyle.

6. Procédé selon la revendications 1 à 5, caractérisé en ce que la diamine B) est le 4,4'-diamino-3,3',5,5'-tétraéthyl-dicyclohexylméthane.

7. Procédé selon la revendications 1 à 6, caractérisé en ce que l'on utilise les diamines B) à l'état de compositions de diamines consistant en produits de réaction de ces diamines avec des prépolymères à groupes NCO essentiellement difonctionnels obtenus eux-mêmes à partir de polyéthers hydroxylés et de diisocyanates organiques, à des quantités de NCO représentant jusqu'à 20 équialents % des groupes amino.

**Claims**

1. A process for the production of light-stable, solvent-resistant polyurethane urea elastomer coatings on substrates or reverse supports by reaction of NCO prepolymers with diamines in a reactive process with continuous mixing and continuous discharge of the reactive mixture, characterized in that

A) NCO prepolymers of

a) relatively high molecular weight polyhydroxyl compounds having molecular weights of from 400 to 10,000 and preferably from 600 to 6000,

ab) optionally with addition of low molecular weight polyols having a molecular weight of from 62 to 390, the overall functionality f or f' of the polyhydroxyl compounds a) + b) being from 1.90 to 2.8 and

b) aliphatic diisocyanates and, optionally, polyfunctional polyisocyanates, the isocycanates b) consisting of

1. from 85 to 100% by weight of aliphatic and, more especially, cycloaliphatic diisocyanates, optionally with addition of

2. from 15 to 0% by weight of polyfunctional polyisocyanates, preferably polyisocyanates having an average functionality of $\geq 3$,

the terminal NCO group content of the NCO prepolymers being from 0.5 to 6% by weight,

the overall functionality f'' of the prepolymers A) being from 1.95 to 2.8,

the monomeric diisocyanate content of the NCO prepolymers being <2% by weight and

the NCO prepolymers A) being in liquid form or optionally dissolved in

c) inert organic solvents having boiling points of up to 150°C, preferably methylethylketone, ethylacetate, toluene or dialkylethers, to form solutions having a solids content of at least 70% by weight, are reacted with,

B) 2,4'- and/or 4,4'-diamino-3,3',5,5'-tetraalkyldicyclohexylalkanes corresponding to the following formula

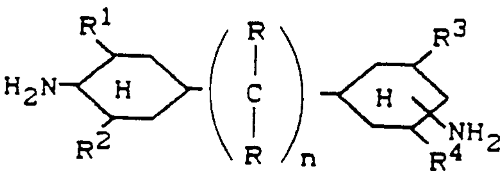

(the positions of the second amino group being either the 2' or 4' position) in which

$R^1$ to $R^4$ may be the same or different and represent straight-chain or branched $C_1$—$C_4$ alkyl groups such as methyl, ethyl, propyl, isopropyl, butyl, isobutyl, tert.-butyl, preferably ethyl or isopropyl, or

$R^1$ and $R^2$ represent ethyl and

$R^3$ and $R^4$ represent isopropyl,

R represents H, $Ch_3$, $C_2H_5$, optionally $C_3H_7$ or $C_4H_9$ although, overall, in the group

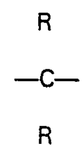

the substituents R together contain no more than 4 carbon atoms and

n = 1, 2 or 3,

and/or in the form of diamine preparations of reaction products of these diamines with substantially difunctional NCO prepolymers in quantities of up to 20 equivalent percent of the amino groups,

in solution in solvents free from aldehyde- or ketone-carbonyl groups, preferably ethyl acetate, optionally with addition of water or alcohols in quantities of at least 1 mole of water and/or alochols per $NH_2$ group, in NCO—$NH_2$ equivalent ratios of A) to B) of from 4.0:1 to 0.85:1, and

components A) and B) are introduced continuously and separately into a high-performance mixer and mixed therein, the reactive mixture is continuously discharged and applied in one or more, successive thin layers either to the desired substrate or to an intermediate support, after which the substrate is placed in the layer while it is still reacting and the solvents are optionally removed at elevated temperature.

2. A process as claimed in Claim 1, characterized in that the diisocyanates Ab) are isophorone diisocyanate and/or 2,4'- and/or 4,4'-diisocyanatodicycylohexyldimethane.

3. A process as claimed in Claims 1 and 2, characterized in that the NCO prepolymers A) contain from 2 to 4.5% of terminal NCO groups, the overall functionality f'' is from 2.0 to 2.7 and the monomeric diisocyanate content is less than 1% by weight.

4. A process as claimed in Claims 1 to 3, characterized in that, in the 4,4'- and/or 2,2'-diaminotetraalkyldicyclohexylalkanes B), the group

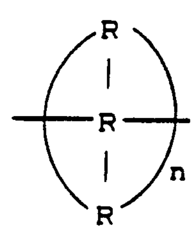

is the $—CH_2—$ or $—C(CH_3)_2$ group.

5. A process as claimed in Claims 1 to 4, characterized in that, in the diamines B), no more than two of the groups $R^1$ to $R^4$ are methyl groups.

6. A process as claimed in Claims 1 to 5, characterized in that the diamine B) is 4,4'-diamino-3,3',5,5'-tetraethyldicyclohexylmethane.

7. A process as claimed in Claims 1 to 6, characterized in that the diamines B) are used in the form of diamine preparations of reaction products of these diamines with substantially difunctional NCO prepolymers of hydroxypolyethers and organic diisocyanates in NCO quantities of up to 20 equivalent percent of the amino groups.